# EUROPEAN PATENT APPLICATION

(11) **EP 4 671 049 A1**
(43) Date of publication of application: **31.12.2025**
(21) Application number: 24759740.4
(22) Date of filing: 22.02.2024
(51) Int. Cl.: B60R 13/08

(54) **DUST COVER ASSEMBLY FOR STEERING COLUMN AND VEHICLE**

(30) Priority: 23.02.2023 CN 202320391057 U
(71) Applicant: BYD Company Limited, Shenzhen, Guangdong 518118 (CN)
(72) Inventor: LI, Yue, Shenzhen, Guangdong 518118 (CN); ZHOU, Yongxiong, Shenzhen, Guangdong 518118 (CN); SHI, Zhechuan, Shenzhen, Guangdong 518118 (CN); NIU, Jinliang, Shenzhen, Guangdong 518118 (CN)
(74) Representative: Taor, Simon Edward William
(86) International application number: PCT/CN2024/078148
(87) International publication number: WO 2024/175066

(57) **Abstract**

A dust cover assembly (100) of a steering column and a vehicle are provided. The dust cover assembly (100) of the steering column includes a dust cover (10) and a support frame (20). At least one cavity (101) is formed inside the dust cover (10). The support frame (20) is configured to be sleeved outside an intermediate shaft (200) of the steering column and is in sealing fit with the intermediate shaft (200). The dust cover (10) is sleeved outside the support frame (20). The support frame (20) is provided with at least one diversion hole (21), and the diversion hole (21) is open toward the intermediate shaft (200) and communicates with the cavity (101).

## Description

### CROSS-REFERENCE TO RELATED APPLICATION

This application claims priority to Chinese Patent Application No. 202320391057.3, filed on February 23, 2023 and entitled "DUST COVER ASSEMBLY OF STEERING COLUMN AND VEHICLE", which is incorporated herein by reference in its entirety.

### TECHNICAL FIELD

This application relates to the field of vehicle technologies, and in particular, to a dust cover assembly of a steering column and a vehicle.

### BACKGROUND

In the related art, waterproof performance of existing dust covers in vehicles needs to be improved.

### SUMMARY

This application aims to resolve at least one of the technical problems in the related art. To this end, an objective of this application is to provide a dust cover assembly of a steering column, to enhance waterproof performance of a dust cover, and facilitate improvement of NVH performance of an entire vehicle.

This application further provides a vehicle using the dust cover assembly of the steering column.

The dust cover assembly of the steering column according to embodiments of this application includes: a dust cover, where at least one cavity is formed inside the dust cover; and a support frame, where the support frame is configured to be sleeved outside an intermediate shaft of the steering column and is in sealing fit with the intermediate shaft, the dust cover is sleeved outside the support frame, the support frame is provided with at least one diversion hole, and the diversion hole is open toward the intermediate shaft and communicates with the cavity.

In the dust cover assembly of the steering column according to embodiments of this application, the dust cover is provided with the cavity and the support frame is provided with the diversion hole. In this way, when the vehicle is submerged or the entire vehicle is under a water wading condition, water infiltrating into a gap between the intermediate shaft and the support frame can flow into the cavity of the dust cover through the diversion hole. This prevents the water infiltrating into the gap from spreading upward and causing water leakage of the dust cover, thereby enhancing waterproof performance of the dust cover. In addition, presence of air in the cavity contributes to better sound insulation effect of the dust cover, and helps improve NVH performance of the entire vehicle.

The vehicle according to this application includes the dust cover assembly of the steering column described in the foregoing embodiments.

Additional aspects and advantages of this application is to be set forth in part in the following descriptions. A part of the additional aspects and advantages will become apparent from the following descriptions, or will be learned from the practice of this application.

### BRIEF DESCRIPTION OF DRAWINGS

FIG. 1 is an exploded view of a dust cover assembly of a steering column according to some embodiments of this application;
FIG. 2 is a cross-sectional view of the dust cover assembly shown in FIG. 1 after being mounted to an intermediate shaft;
FIG. 3 is an enlarged view of A in FIG. 2; and
FIG. 4 is a diagram of a vehicle according to some embodiments of this application.

Reference numerals:
vehicle: 1000;
dust cover assembly: 100; intermediate shaft: 200; pressure plate: 300;
dust cover: 10; cavity: 101; inlet: 102;
inner layer portion: 11; first end portion: 111; second end portion: 112; outer layer portion: 12;
support frame: 20; sealing portion: 201; mounting portion: 202;
diversion hole: 21; mounting groove: 22;
sealing structure: 30; sealing ring: 31; limiting ring: 32.

### DESCRIPTION OF EMBODIMENTS

Embodiments of this application are described in detail below, examples of which are shown in the accompanying drawings, where the same or similar reference numerals represent the same or similar elements or elements having the same or similar functions throughout. Embodiments described below with reference to the accompanying drawings are exemplary and are merely used to explain this application, and should not be construed as limiting this application.

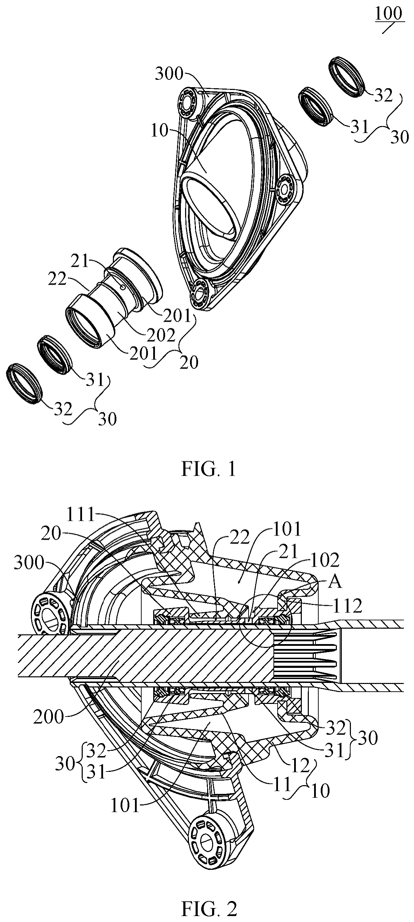

The following describes a dust cover assembly 100 of a steering column according to embodiments of this application with reference to FIG. 1 to FIG. 4.

As shown in FIG. 1, the dust cover assembly 100 of the steering column according to embodiments of this application includes: a dust cover 10 and a support frame 20.

As shown in FIG. 2, at least one cavity 101 is formed inside the dust cover 10. The support frame 20 is configured to be sleeved outside an intermediate shaft 200 of the steering column and is in sealing fit with the intermediate shaft 200. The dust cover 10 is sleeved outside the support frame 20. The support frame 20 is provided with at least one diversion hole 21, and the diversion hole 21 is open toward the intermediate shaft 200 and communicates with the cavity 101.

When the vehicle 1000 is submerged or the entire vehicle is under a water wading condition, water infiltrating into a gap between the intermediate shaft 200 and the support frame 20 can flow into the cavity 101 of the dust cover 10 through the diversion hole 21. This prevents the water infiltrating into the gap from spreading upward and causing water leakage of the dust cover 10, thereby enhancing waterproof performance of the dust cover 10. In addition, presence of air in the cavity 101 contributes to better sound insulation effect of the dust cover 10, and helps improve NVH performance of the entire vehicle.

For example, as shown in FIG. 1, the dust cover assembly 100 includes the dust cover 10, the support frame 20, and a pressure plate 300. During actual assembly, the support frame 20 may be first sleeved outside the intermediate shaft 200, and the dust cover 10 is sleeved outside the support frame 20. As shown in FIG. 2, the support frame 20 may be press-fitted inside the dust cover 10, to enhance connection stability between the support frame 20 and the dust cover 10.

In a specific implementation of this application, the press-fitted dust cover 10 is mounted on a metal or plastic pressure plate 300, which subsequently passes through a front wall panel of a vehicle body, and is preliminarily positioned by using a welded stud on a sheet metal of the front wall panel. After the pressure plate 300 is fully attached to a surface of the sheet metal of the front wall panel, a nut is used to fasten the dust cover assembly 100 to the front wall panel.

As shown in FIG. 2, the dust cover 10 is fastened to the support frame 20, and the support frame 20 is in sealing fit with the intermediate shaft 200. The foregoing structure may enhance sealing effect of the intermediate shaft 200, and achieve dustproof and waterproof effect by using the dust cover 10 and the support frame 20 at an opening position at which the intermediate shaft 200 passes through the front wall panel.

In the related art, the steering system is generally disposed at a front side of the vehicle body, and at least a portion of the steering column needs to extend into interior space of the vehicle to connect to a steering wheel. This requires the intermediate shaft of the steering column to pass through the front wall panel to extend into the interior space of the vehicle. To ensure waterproof sealing at the opening position, the dust cover needs to be disposed between a shaft body and a through hole of the front wall panel to improve waterproof effect.

However, a conventional dust cover structure is usually a single-layer rubber structure (without a cavity). When the dust cover structure is mounted on the intermediate shaft, waterproof effect of the dust cover structure is not obvious. For example, when the vehicle is submerged or the entire vehicle is under a water wading condition, waterproof performance of the dust cover structure is prone to fail. For a vehicle model such as an off-road vehicle, because of a harsh use environment of the entire off-road vehicle, a higher requirement is imposed on dustproof and waterproof performance as well as NVH performance of the entire off-road vehicle. However, the existing dust cover 10 structure cannot meet a use requirement of the vehicle 1000.

Therefore, in this application, the dust cover 10 is provided with the cavity 101, and the support frame 20 is provided with the diversion hole 21. The diversion hole 21 is open toward the intermediate shaft 200 and communicates with the cavity 101. In this way, when the vehicle 1000 is submerged or the entire vehicle is under a water wading condition, if the sealing fit between the support frame 20 and the intermediate shaft 200 is damaged, a gap occurs between the intermediate shaft 200 and the support frame 20. As a result, a part of water infiltrates into the gap between the intermediate shaft 200 and the support frame 20.

Water infiltrating into the gap between the intermediate shaft 200 and the support frame 20 can flow into the cavity 101 of the dust cover 10 through the diversion hole 21. This prevents the water infiltrating into the gap from spreading upward and causing water leakage of the dust cover 10, thereby enhancing waterproof performance of the dust cover 10.

The diversion hole 21 has a diversion function and can divert water in the gap between the intermediate shaft 200 and the support frame 20 into the cavity 101 of the dust cover 10. In this case, the cavity 101 of the dust cover 10 has a water storage function.

A part of the residual liquid entering the cavity 101 is drained through evaporation, which does not damage performance of the dust cover 10 and does not affect subsequent use of the entire vehicle. In addition, a bench test of static and dynamic water immersion conditions was conducted on the dust cover assembly 100 of this embodiment. Test results show that when the dust cover 10 is under a water immersion condition, waterproof performance of the dust cover 10 does not fail when the steering intermediate shaft 200 is in both static and dynamic conditions.

There may be one cavity 101 and one diversion hole 21. Alternatively, there may be a plurality of cavities 101 and a plurality of diversion holes 21, and the plurality of cavities 101 and the plurality of diversion holes 21 are in a one-to-one correspondence. Alternatively, there may be one cavity 101 and a plurality of diversion holes 21. This is not limited herein.

When there are a plurality of diversion holes 21, the plurality of diversion holes 21 may be spaced apart in a circumferential direction and/or an axial direction of the support frame 20, to reduce processing difficulty of the diversion holes 21.

The diversion hole 21 may be circular, square, or polygonal, which is not limited herein. In addition, the diversion hole 21 may be reserved at a mold design stage of the support frame 20, and a shape, a position, and a size of an opening of the diversion hole 21 may be controlled by an injection mold.

Because of presence of air in the cavity 101, when the intermediate shaft 200 vibrates, vibration transmission can be reduced through the cavity 101, and noise can be absorbed through the cavity 101, thereby improving NVH performance of the entire vehicle.

In the dust cover assembly 100 of the steering column according to embodiments of this application, the dust cover 10 is provided with the cavity 101, and the support frame 20 is provided with the diversion hole 21. In this way, when the vehicle 1000 is submerged or the entire vehicle is under a water wading condition, water infiltrating into a gap between the intermediate shaft 200 and the support frame 20 can flow into the cavity 101 of the dust cover 10 through the diversion hole 21. This prevents the water infiltrating into the gap from spreading upward and causing water leakage of the dust cover 10, thereby enhancing waterproof performance of the dust cover 10. In addition, presence of air in the cavity 101 contributes to better sound insulation effect of the dust cover 10, and helps improve NVH performance of the entire vehicle.

In some embodiments, as shown in FIG. 2, the dust cover 10 includes an inner layer portion 11 and an outer layer portion 12. The outer layer portion 12 is connected to an outer side of the inner layer portion 11 and defines the cavity 101 with the inner layer portion 11. The cavity 101 may be directly formed when the dust cover 10 is integrally formed, so that the cavity 101 does not need to be processed separately, thereby reducing production difficulty.

In some embodiments, the dust cover 10 is constructed as a double-layer hollow structure, and the dust cover 10 may be made of a rubber or silica gel material. In this way, the dust cover 10 may be formed in a single molding process, with both structural precision and sealing performance ensured by an existing mature production process. In addition, a hollow structure of a rubber body may be designed through comprehensive consideration, such as integrating a surrounding environment, matching dimensions and specifications of parts and actual requirements, to reduce production difficulty and improve production efficiency.

As shown in FIG. 2, the inner layer portion 11 is provided with an inlet 102 communicating with the cavity 101, and the inner layer portion 11 includes a first end portion 111 and a second end portion 112 that are sequentially distributed in an axial direction. The first end portion 111 and the second end portion 112 are spaced apart and define the inlet 102, and the diversion hole 21 faces at least a part of the inlet 102.

The foregoing structure is used, so that the inlet 102 can be directly defined through the first end portion 111 and the second end portion 112. In this way, no opening needs to be formed separately in the inner layer portion 11, thereby reducing configuration difficulty of the inlet 102. In addition, the diversion hole 21 faces at least a part of the inlet 102, so that a distance between the inlet 102 and the diversion hole 21 can be shortened, and the diversion hole 21 can divert water into the cavity 101 more quickly.

In some embodiments, an outer peripheral wall of the support frame 20 is provided with a mounting groove 22. The diversion hole 21 is located on a bottom wall of the mounting groove 22, and the inner layer portion 11 is clamped to the mounting groove 22. This helps enhance connection stability between the support frame 20 and the inner layer portion 11, that is, enhance connection stability between the support frame 20 and the dust cover 10.

For example, as shown in FIG. 1, the support frame 20 includes a mounting portion 202 and a sealing portion 201. Two ends of the support frame 20 in the axial direction are sealing portions 201. The sealing portion 201 is configured to be in sealing fit with the intermediate shaft 200. The mounting portion 202 is connected between the two sealing portions 201. A diameter of the mounting portion 202 is smaller than a diameter of the sealing portion 201. In this way, at an outer side of the support frame 20 in a radial direction, the mounting groove 22 open toward the outer side of the support frame 20 in the radial direction can be defined by two sealing portions 201 and one mounting portion 202.

When the dust cover 10 is fastened to the support frame 20, at least a part of the inner layer portion 11 of the dust cover 10 extends into the mounting groove 22, and the first end portion 111 and the second end portion 112 of the inner layer portion 11 are respectively clamped to and fitted with the two sealing portions 201. This helps fasten the dust cover 10 to the support frame 20, improves connection stability between the dust cover 10 and the support frame 20, and helps define the inlet 102 between the first end portion 111 and the second end portion 112.

The diversion hole 21 is located in the mounting portion 202, and is in the radial direction of the support frame 20, and the diversion hole 21 faces at least a part of the inlet 102. In this way, a distance between the diversion hole 21 and the inlet 102 can be shortened, and the diversion hole 21 can more quickly divert water into the cavity 101.

In some embodiments, the support frame 20 is configured to be in sealing fit with the intermediate shaft 200 through at least two groups of sealing structures 30, and the at least two groups of sealing structures 30 are spaced apart in an axial direction of the support frame 20.

Water ingress of the intermediate shaft 200 generally occurs at a part at which the intermediate shaft 200 is in sealing fit with the support frame 20. Therefore, the at least two groups of sealing structures 30 are disposed and spaced apart in the axial direction of the support frame 20. In other words, the at least two groups of sealing structures 30 are disposed at two ends in an axial direction of the part at which the intermediate shaft 200 is fit with the support frame 20.

In some embodiments, in the axial direction of the intermediate shaft 200, sealing effect between the intermediate shaft 200 and the support frame 20 may be enhanced through the at least two groups of sealing structures 30.

For example, there may be three groups of sealing structures 30, where two groups of sealing structures 30 are located at one end in the axial direction of the part at which the intermediate shaft 200 is fit with the support frame 20, and the other group of sealing structures 30 is located at the other end in the axial direction of the part at which the intermediate shaft 200 is fit with the support frame 20. It is clear that the foregoing quantities and distribution forms of the sealing structures 30 are merely used as examples for description, and do not represent a limitation thereto.

In a specific implementation, there are two groups of sealing structures 30, and the two groups of sealing structures 30 are respectively located at two end areas of the support frame 20, and the diversion hole 21 is located between the two groups of sealing structures 30. This helps implement sealing fit between the support frame 20 and the intermediate shaft 200 in the two end areas of the support frame 20 through the two groups of sealing structures 30, thereby enhancing connection sealing between the support frame 20 and the intermediate shaft 200.

The diversion hole 21 is located between the two groups of sealing structures 30, so that, in practical use, the sealing structures 30 can be used to prevent water ingress between the intermediate shaft 200 and the support frame 20. If the vehicle 1000 is submerged or the entire vehicle is under a water wading condition, or the sealing structure 30 is damaged, a small amount of water infiltrates into the gap between the intermediate shaft 200 and the support frame 20. After infiltrating into the gap between the intermediate shaft 200 and the support frame 20, the water enters the cavity 101 through the diversion hole 21, thereby preventing the water from affecting the intermediate shaft 200. The diversion hole 21 is disposed between the two groups of sealing structures 30, to provide secondary waterproof effect for the intermediate shaft 200.

In some embodiments, the sealing structure 30 includes a sealing ring 31, and the sealing ring 31 is sleeved on the intermediate shaft 200 and is clamped to the support frame 20. Sealing effect between the support frame 20 and the intermediate shaft 200 may be enhanced through the sealing ring 31. The sealing ring 31 is clamped to the support frame 20, to enhance connection stability between the sealing ring 31 and the support frame 20. This can avoid a problem that the sealing ring 31 falls off or the sealing ring 31 is displaced when the support frame 20 is mounted on the intermediate shaft 200.

For example, the sealing ring 31 may be constructed as a rubber ring. An outer peripheral wall in a radial direction of the rubber ring is clamped to the support frame 20. An inner peripheral wall in the radial direction of the rubber ring has two protrusions. In this way, when the support frame 20 is mounted on the intermediate shaft 200, the intermediate shaft 200 presses the rubber ring to cause the rubber ring to elastically deform. In this case, the two protrusions of the rubber ring elastically deform and abut against the intermediate shaft 200. A cross-sectional shape of the protrusion may be zigzag or wavy, which is not limited herein, so that the sealing ring 31 can better enhance sealing between the support frame 20 and the intermediate shaft 200.

The foregoing material and specific structure of the sealing ring 31 are merely used as an example. For example, the sealing ring 31 may be a plastic ring or a nylon ring. This is not limited herein.

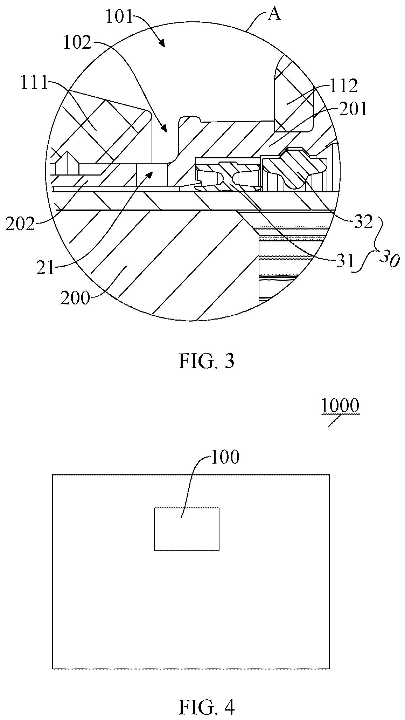

As shown in FIG. 2 and FIG. 3, the sealing structure 30 further includes a limiting ring 32. The limiting ring 32 is sleeved on the intermediate shaft 200, and the limiting ring 32 abuts against the sealing ring 31 and is clamped to the support frame 20. Sealing effect between the support frame 20 and the intermediate shaft 200 may be enhanced through the limiting ring 32. The limiting ring 32 is clamped to the support frame 20, to enhance connection stability between the limiting ring 32 and the support frame 20. In addition, the limiting ring 32 can abut against the sealing ring 31, to play a limiting role for the sealing ring 31. This can avoid a problem that the sealing ring 31 falls off or the sealing ring 31 is displaced when the support frame 20 is mounted on the intermediate shaft 200.

For example, the limiting ring 32 may be constructed as a rubber ring. An outer peripheral wall in a radial direction of the rubber ring is clamped to the support frame 20. In addition, a pressing portion protruding in the radial direction is disposed at a middle part of the rubber ring, so that the pressing portion can abut against the sealing ring 31, thereby enhancing structural stability of the sealing ring 31. A cross-sectional shape of the pressing portion may be zigzag or wavy. This is not limited herein.

The foregoing material and specific structure of the limiting ring 32 are merely used as an example. For example, the limiting ring 32 may be a plastic ring or a nylon ring. This is not limited herein.

As shown in FIG. 2 and FIG. 3, the limiting ring 32 is located on a side that is of the sealing ring 31 and that is away from the diversion hole 21. The limiting ring 32 can play a limiting role for the sealing ring 31 on the side that is of the sealing ring 31 and that is away from the diversion hole 21, thereby preventing the sealing ring 31 from falling off from the intermediate shaft 200.

In some embodiments, the sealing ring 31 and the limiting ring 32 are distributed in the axial direction of the support frame 20.

In the related art, a sealing kit mounted between the dust cover and the intermediate shaft usually includes a plurality of successively sleeved structures, resulting in a complex dimension chain relationship, which is not conducive to product consistency control in actual production.

However, in this embodiment, the sealing ring 31 and the limiting ring 32 are distributed in the axial direction of the support frame 20. This can ensure sealing effect and simplify the dimension chain relationship of the sealing ring 31 and the limiting ring 32, thereby facilitating product consistency control in actual production.

In some embodiments, the support frame 20 is an integrally formed structure. The support frame 20 includes a mounting portion 202 and a sealing portion 201. Two ends of the support frame 20 in the axial direction are sealing portions 201. The sealing portion 201 is configured to be in sealing fit with the intermediate shaft 200. The mounting portion 202 is connected between the two sealing portions 201. An inner diameter of the mounting portion 202 is smaller than an inner diameter of the sealing portion 201, and the two groups of sealing structures 30 are respectively mounted in the two sealing portions 201.

In the axial direction of the support frame 20, a connection part between the mounting portion 202 and the sealing portion 201 may be used to play a limiting role for the sealing ring 31 on a side that is of the sealing ring 31 and that is close to the diversion hole 21. In addition, the limiting ring 32 is used to play a limiting role for the sealing ring 31 on the side that is of the sealing ring 31 and that is away from the diversion hole 21, thereby enhancing structural stability of the sealing ring 31.

In the related art, the support frame mounted between the dust cover and the intermediate shaft usually adopts a separated design. During actual assembly, a plurality of assembly stages are required, resulting in a complex assembly process. In addition, during an entire vehicle durability road test, the support frame is prone to abnormal noises and loosening caused by an increased fitting gap.

In this embodiment, the support frame 20 is constructed as an integrally formed structure. In this way, during actual assembly, the assembly process can be simplified, and assembly efficiency can be improved. In addition, during the entire vehicle durability road test, abnormal noises and loosening caused by an increased fitting gap can be avoided.

The support frame 20 is integrally formed through an injection molding process. The support frame 20 may be a plastic or nylon support frame. The diversion hole 21 may be reserved in a mold design stage, and a shape, a position and a size of the opening may be controlled by an injection mold. The outer peripheral wall of the support frame 20 can fasten a lip of the inner layer portion 11 of the dust cover 10. The inner peripheral wall of the support frame 20 provides a mounting structure for the sealing ring 31 and the limiting ring 32.

This application further provides a vehicle 1000.

As shown in FIG. 4, the vehicle 1000 according to an embodiment of this application includes the dust cover assembly 100 of the steering column according to any one of the foregoing embodiments.

In a specific implementation, the vehicle 1000 in this application may be an off-road vehicle. In another embodiment, the vehicle 1000 may alternatively be another vehicle model. This is not limited herein.

According to the vehicle 1000 in the embodiment of this application, in the dust cover assembly 100 of the vehicle 1000, the dust cover 10 is provided with the cavity 101, and the support frame 20 is provided with the diversion hole 21. In this way, when the vehicle 1000 is submerged or the entire vehicle is under a water wading condition, water infiltrating into a gap between the intermediate shaft 200 and the support frame 20 can flow into the cavity 101 of the dust cover 10 through the diversion hole 21. This prevents the water infiltrating into the gap from spreading upward and causing water leakage of the dust cover 10, thereby enhancing waterproof performance of the dust cover 10. In addition, presence of air in the cavity 101 contributes to better sound insulation effect of the dust cover 10, and helps improve NVH performance of the entire vehicle.

In the descriptions of this specification, the reference terms "an embodiment", "some embodiments", "an exemplary embodiment", "an example", "a specific example", or "some examples" and the like mean that the specific features, structures, materials, or characteristics described with reference to the embodiment or example are included in at least one embodiment or example of this application. In this specification, the exemplary expressions of the foregoing terms do not necessarily mean the same embodiments or examples. In addition, in the descriptions of this specification, the described specific features, structures, materials, or characteristics may be combined in a proper manner in any one or more of embodiments or examples.

Although embodiments of this application have been shown and described, a person of ordinary skill in the art may understand that various changes, modifications, substitutions, and variations may be made to these embodiments without departing from the principles and purposes of this application. The scope of this application is defined by the claims and their equivalents.

## Claims

1. A dust cover assembly (100) of a steering column, comprising:
a dust cover (10), wherein at least one cavity (101) is formed inside the dust cover (10); and
a support frame (20), wherein the support frame (20) is configured to be sleeved outside an intermediate shaft (200) of the steering column and is in sealing fit with the intermediate shaft (200), the dust cover (10) is sleeved outside the support frame (20), the support frame (20) is provided with at least one diversion hole (21), and the diversion hole (21) is open toward the intermediate shaft (200) and communicates with the cavity (101).

2. The dust cover assembly (100) of the steering column according to claim 1, wherein the dust cover (10) comprises an inner layer portion (11) and an outer layer portion (12), and the outer layer portion (12) is connected to an outer side of the inner layer portion (11) and defines the cavity (101) with the inner layer portion (11).

3. The dust cover assembly (100) of the steering column according to claim 2, wherein the inner layer portion (11) is provided with an inlet (102) communicating with the cavity (101), and the inner layer portion (11) comprises a first end portion (111) and a second end portion (112) that are sequentially distributed in an axial direction, wherein the first end portion (111) and the second end portion (112) are spaced apart and define the inlet (102), and the diversion hole (21) faces at least a part of the inlet (102).

4. The dust cover assembly (100) of the steering column according to claim 2 or 3, wherein an outer peripheral wall of the support frame (20) is provided with a mounting groove (22), the diversion hole (21) is located on a bottom wall of the mounting groove (22), and the inner layer portion (11) is clamped to the mounting groove (22).

5. The dust cover assembly (100) of the steering column according to any one of claims 1 to 4, wherein the support frame (20) is configured to be in sealing fit with the intermediate shaft (200) through at least two groups of sealing structures (30), and the at least two groups of sealing structures (30) are spaced apart in an axial direction of the support frame (20).

6. The dust cover assembly (100) of the steering column according to claim 5, wherein there are two groups of sealing structures (30), and the two groups of sealing structures (30) are respectively located at two end areas of the support frame (20), and the diversion hole (21) is located between the two groups of sealing structures (30).

7. The dust cover assembly (100) of the steering column according to claim 5 or 6, wherein the sealing structure (30) comprises a sealing ring (31), and the sealing ring (31) is sleeved on the intermediate shaft (200) and clamped to the support frame (20).

8. The dust cover assembly (100) of the steering column according to claim 6, wherein the sealing structure (30) further comprises a limiting ring (32), the limiting ring (32) is sleeved on the intermediate shaft (200), and the limiting ring (32) abuts against the sealing ring (31) and is clamped to the support frame (20).

9. The dust cover assembly (100) of the steering column according to claim 8, wherein the limiting ring (32) is located on a side that is of the sealing ring (31) and that is away from the diversion hole (21).

10. A vehicle (1000), comprising the dust cover assembly (100) of the steering column according to any one of claims 1 to 9.
